# EUROPEAN PATENT APPLICATION

(11) **EP 4 711 049 A1**
(43) Date of publication of application: **18.03.2026**
(21) Application number: 24803294.8
(22) Date of filing: 26.03.2024
(51) Int. Cl.: B05D 1/04, B05C 5/00, B05C 11/10, B05D 1/26, B05D 3/00

(54) **DROPLET DISCHARGE DEVICE AND DROPLET DISCHARGE METHOD**

(30) Priority: 11.05.2023 JP 2023078885
(71) Applicant: SIJTechnology, Inc., Tsukuba-shi, Ibaraki 305-0817 (JP)
(72) Inventor: Murata, Kazuhiro, Tsukuba-shi, Ibaraki 305-0817 (JP)
(74) Representative: Gill Jennings & Every LLP
(86) International application number: PCT/JP2024/012050
(87) International publication number: WO 2024/232179

(57) **Abstract**

A liquid droplet ejection method is provided including capturing an image of a pattern on a substrate, acquiring first image data corresponding to the pattern, and applying the first image data to a machine learning model to perform machine learning and generate liquid droplet ejection conditions based on an electrostatic method. The liquid droplet ejection method described above may further include generating the machine learning model by performing machine learning on pre-acquired first image data.

## Description

### TECHNICAL FIELD

The present invention relates to a liquid droplet ejection device and a liquid droplet ejection method.

### BACKGROUND ART

In recent years, the application of ink jet printing technology to industrial processes has been carried out. For example, a color filter manufacturing process for a liquid crystal display is an example. Conventionally, although a so-called piezo type head that ejects liquid droplets by mechanical pressure or vibration has been widely used as an ink jet printing technique, an electrostatic ejection type ink jet head that can eject finer liquid droplets has attracted attention. Patent Literature 1 discloses an electrostatic ejection type inkjet recording device.

### CITATION LIST

### PATENT LITERATURE

Patent Literature 1: Japanese Laid-Open Patent Publication No. 10-34967

### SUMMARY OF INVENTION

### TECHNICAL PROBLEM

On the other hand, the pattern provided on the base material varies, and is not uniform. In the piezo method, liquid droplets can be ejected without being affected by the pattern on the substrate side. However, in the case of electrostatic liquid droplet ejection, since a difference occurs in liquid droplet ejection conditions between a place where there is a pattern and a place where there is no pattern, there is a case where liquid droplets having a uniform size cannot be ejected (a pattern cannot be uniformly formed).

Therefore, an object of the present invention is to stably perform liquid droplet ejection by an electrostatic method without being affected by a pattern on a substrate side.

### SOLUTION TO PROBLEM

According to an embodiment of the present invention, a liquid droplet ejection method is provided, wherein the liquid droplet ejection method includes capturing an image of a pattern on a substrate, acquiring first image data corresponding to the pattern, and applying the first image data to a machine learning model to perform machine learning and generate liquid droplet ejection conditions based on an electrostatic method.

The liquid droplet ejection method described above may further include generating the machine learning model by performing machine learning on pre-acquired first image data.

The liquid droplet ejection method described above may further include capturing an image of a shape of a liquid droplet ejected from an electrostatic liquid droplet ejection nozzle, wherein the machine learning model may be a learning model trained on a correlation between the pattern and the shape of the liquid droplet.

In the liquid droplet ejection method described above, the machine learning model may be a learning model trained on a correlation between the pattern and conductivity of the substrate.

In the liquid droplet ejection method described above, the machine learning model may be a learning model trained on a correlation between the pattern and at least one of a shape of an electrostatic liquid droplet ejection nozzle and humidity.

In the liquid droplet ejection method described above, the machine learning model may be a learning model trained on a correlation between the pattern and a contact angle of a liquid droplet with respect to the substrate.

In the liquid droplet ejection method described above, the liquid droplet ejection conditions may include at least one of an ejection voltage, frequency, and a distance between the substrate and the electrostatic liquid droplet ejection nozzle.

According to an embodiment of the present invention, a liquid droplet ejection device is provided, wherein the liquid droplet ejection device includes an imaging unit configured to capture an image of a pattern on a substrate, and a control unit configured to acquire first image data corresponding to the pattern, apply the first image data to a machine learning model to perform machine learning, and generate liquid droplet ejection conditions based on an electrostatic method.

In the liquid droplet ejection device described above, the control unit may generate the machine learning model by performing machine learning on pre-acquired first image data.

The liquid droplet ejection device described above may further include a second imaging unit configured to capture an image of a shape of a liquid droplet ejected from an electrostatic liquid droplet ejection nozzle, wherein the machine learning model may be a learning model trained on a correlation between the pattern and the shape of the liquid droplet.

In the liquid droplet ejection device described above, the machine learning model may be a learning model trained on a correlation between the pattern and conductivity of the substrate.

In the liquid droplet ejection device described above, the machine learning model may be a learning model trained on a correlation between the pattern and at least one of a shape of the electrostatic liquid droplet ejection nozzle and humidity.

In the liquid droplet ejection device described above, the machine learning model may be a learning model trained on a correlation between the pattern and a contact angle of a liquid droplet with respect to the substrate.

In the liquid droplet ejection device described above, the liquid droplet ejection conditions may include at least one of an ejection voltage, frequency, and a distance between the substrate and the electrostatic liquid droplet ejection nozzle.

### ADVANTAGEOUS EFFECTS OF INVENTION

By using an embodiment of the present invention, it is possible to stably perform liquid droplet ejection by an electrostatic method without being affected by a pattern on a substrate side.

### BRIEF DESCRIPTION OF DRAWINGS

FIG. 1 is a schematic view of a liquid droplet ejection device according to an embodiment of the present invention.
FIG. 2 is a functional block diagram of a control unit according to an embodiment of the present invention.
FIG. 3 is a liquid droplet ejection condition data set according to an embodiment of the present invention.
FIG. 4 is a flow diagram of liquid droplet ejection according to an embodiment of the present invention.
FIG. 5 is a flowchart of a learning process according to an embodiment of the present invention.
FIG. 6A is a schematic diagram of imaging data.
FIG. 6B is a schematic diagram of the imaging data.
FIG. 7A is a schematic diagram of the imaging data.
FIG. 7B is a schematic diagram of the imaging data.
FIG. 7C is a schematic diagram of the imaging data.
FIG. 8A is a schematic diagram of the imaging data.
FIG. 8B is a schematic diagram of the imaging data.
FIG. 8C is a schematic diagram of the imaging data.
FIG. 9 is a flow diagram of liquid droplet ejection according to an embodiment of the present invention.
FIG. 10 is a flow diagram of liquid droplet ejection according to an embodiment of the present invention.
FIG. 11 is a schematic view of a liquid droplet ejection device according to an embodiment of the present invention.
FIG.12 is a functional block diagram of a control unit according to an embodiment of the present invention.
FIG.13 is a schematic view of a liquid droplet ejection device according to an embodiment of the present invention.
FIG. 14A is an enlarged top schematic view of a portion of a multi-nozzle head 151.
FIG. 14B is an enlarged schematic cross-sectional view of a portion of the multi-nozzle head 151.

### DESCRIPTION OF EMBODIMENTS

Hereinafter, embodiments of the invention disclosed in the present application will be described with reference to the drawings. However, the present invention can be implemented in various forms without departing from the gist thereof, and is not to be construed as being limited to the description of the embodiments exemplified below.

In addition, in the drawings referred to in the present embodiment, the same or similar parts are denoted by the same reference signs or similar reference signs (only denoted by A, B, -1, -2, or the like after the numerals), and repeated description thereof may be omitted. In addition, the dimensional ratios in the drawings may be different from actual ratios for convenience of explanation, or a part of the configuration may be omitted from the drawings.

Furthermore, in the detailed description of the present invention, when defining a positional relationship between one component and another component, the terms "above" and "below" include not only the case where the component is located directly above or directly below, but also the case where another component is interposed therebetween unless otherwise specified.

### [First Embodiment]

### [1-1. Configuration of Liquid Droplet Ejection Device 100]

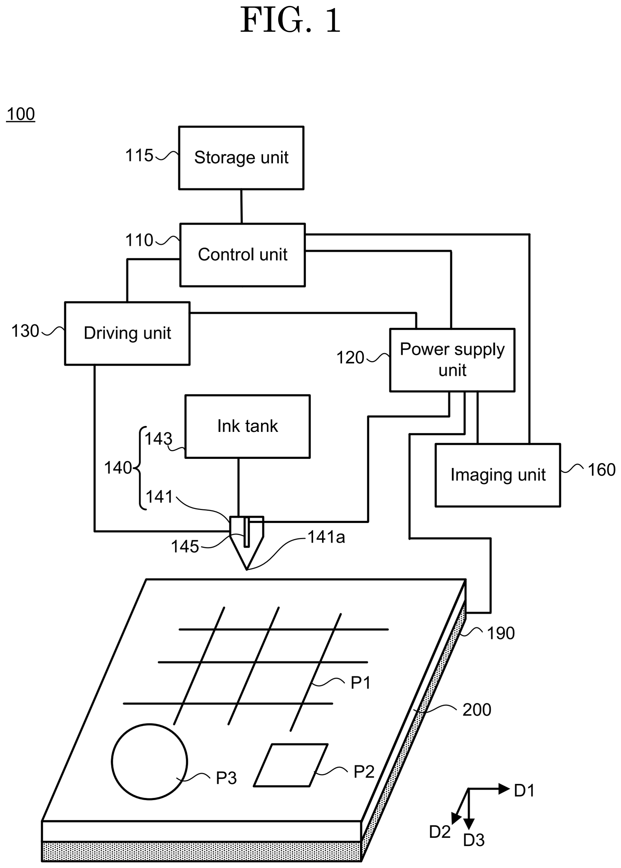

FIG. 1 is a schematic diagram of a liquid droplet ejection device 100 according to an embodiment of the present invention.

The liquid droplet ejection device 100 includes a control unit 110, a storage unit 115, a power supply unit 120, a driving unit 130, a liquid droplet ejection unit 140, an imaging unit 160, and a substrate holding unit 190.

The control unit 110 includes a processor, such as a CPU (Central Processing Unit), an ASIC (Application Specific Integrated Circuit), an FPGA (Field Programable Gate Array), or another arithmetic processor. The control unit 110 controls the ejection process of the liquid droplet ejection unit 140 using a liquid droplet ejection program set in advance.

The storage unit 115 has a function as a database for storing the liquid droplet ejection program and various kinds of information used in the liquid droplet ejection program. As the storage unit 115, memories, SSD, or memorizable elements are used.

The power supply unit 120 is connected to the control unit 110, the storage unit 115, the driving unit 130, the liquid droplet ejection unit 140, and the substrate holding unit 190. The power supply unit 120 applies a voltage to the liquid droplet ejection unit 140 based on a signal input from the control unit 110. In this example, the power supply unit 120 applies a pulsed voltage to the liquid droplet ejection unit 140. In addition, the voltage is not limited to the pulse voltage, and a constant voltage may be constantly applied. Liquid droplets are ejected in a direction (third direction D3) of a substrate 200 from a tip 141a of a liquid droplet ejection nozzle 141, which will be described later, by the voltage applied from the power supply unit 120 to the liquid droplet ejection unit 140.

The driving unit 130 includes a drive member such as a motor, a belt, and a gear. The driving unit 130 moves the liquid droplet ejection unit 140 relative to the substrate holding unit 190 (in this case, in a first direction D1 or a second direction D2, the first direction D1 and the second direction D2 intersect (the first direction D1 and the second direction D2 are perpendicular to each other.).) based on instructions from the control unit 110. As a result, the driving unit 130 controls a relative positional relationship between the substrate 200 and the liquid droplet ejection unit 140 when the device is in use (during liquid droplet ejection).

The driving unit 130 may appropriately fix the liquid droplet ejection unit 140 (the liquid droplet ejection nozzle 141) and move the substrate 200. Further, the driving unit 130 may be used in combination with a position adjustment mechanism such as a goniometer stage to finely adjust the liquid droplet ejection nozzle 141.

The liquid droplet ejection unit 140 includes the liquid droplet ejection nozzle 141 and an ink tank 143. An electrostatic inkjet nozzle is used as the liquid droplet ejection nozzle 141. Therefore, the liquid droplet ejection nozzle 141 is also referred to as an electrostatic liquid droplet ejection nozzle. An inner diameter of the tip 141a of the liquid droplet ejection nozzle 141 is several hundred nm or more and 20 µm or less, preferably 1 µm or more and 15 µm or less, and more preferably 5 µm or more and 12 µm or less.

The liquid droplet ejection nozzle 141 has a glass tube, and an electrode 145 is provided inside the glass tube. In this example, a thin wiring of tungsten is used as the electrode 145. In addition, the electrode 145 is not limited to tungsten, and nickel, molybdenum, titanium, gold, silver, copper, platinum, or the like may be provided.

The liquid droplet ejection nozzle 141 of the liquid droplet ejection unit 140 is provided perpendicular to a surface of the substrate 200 (an upper surface of the substrate holding unit 190).

The substrate holding unit 190 has a function of holding the substrate 200. In this example, a stage is used as the substrate holding unit 190. The mechanism by which the substrate holding unit 190 holds the substrate 200 is not particularly limited, and a general holding mechanism is used. In this example, the substrate 200 is vacuum-attracted to the substrate holding unit 190. In addition, the present invention is not limited to this, and the substrate holding unit 190 may hold the substrate 200 using a fixture.

The substrate 200 is a member in which liquid droplets ejected from the liquid droplet ejection unit 140 are ejected. In this example, a glass substrate is used as the substrate 200. In addition, the substrate 200 is not limited to the glass substrate. For example, it may be a metal plate or a plate-like member made of resin. Further, the present invention is not limited to the substrate, and other structures may be used as long as they can be fixed. Patterns P1, P2, and P3 formed of a metal wiring or an organic resin material are provided on the substrate 200. The substrate 200 may be provided with a counter electrode for ejecting liquid droplets. In this case, a potential GND (Ground) may be applied to the substrate 200.

The imaging unit 160 captures an image of a pattern formed on the substrate 200. In this embodiment, an image sensor (camera) of a CCD (Charge Coupled Device) type or a CMOS (Complementary Metal Oxide Semiconductor) type is used as the imaging unit 160. Information acquired by the imaging unit 160 is transmitted to the control unit 110 and the storage unit 115.

### [1-2. Functional Block Diagram of Control Unit]

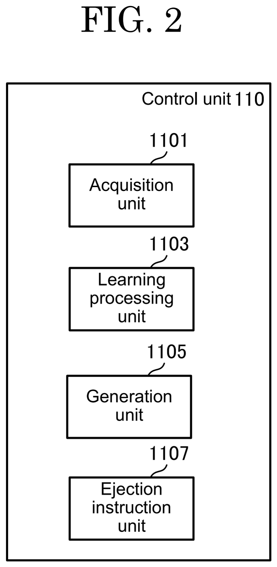

FIG. 2 is a functional block diagram of the control unit 110. As shown in FIG. 2, the control unit 110 includes an acquisition unit 1101, a learning processing unit 1103, a generation unit 1105, and an ejection instruction unit 1107 as functional units in a program for realizing liquid droplet ejection (liquid droplet ejection program).

The acquisition unit 1101 has a function of acquiring imaging data captured by the imaging unit 160. The acquired imaging data is stored in the storage unit 115.

The learning processing unit 1103 has a function of performing machine learning based on a machine learning model generated using imaging data (teacher data) acquired in advance.

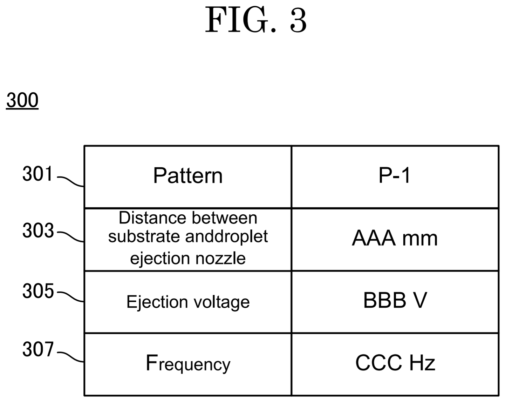

The generation unit 1105 has a function of generating a liquid droplet ejection condition based on a learning result. FIG. 3 is a liquid droplet ejection condition data set 300. In this example, the liquid droplet ejection condition data set 300 includes a pattern identifier 301, a distance between the substrate and the liquid droplet ejection nozzle 303, an ejection voltage 305, and a frequency 307 for applying a pulse voltage when ejecting liquid droplets.

The ejection instruction unit 1107 has a function of instructing the liquid droplet ejection unit 140, the power supply unit 120, and the driving unit 130 to eject liquid droplets from the liquid droplet ejection unit 140 based on the generated liquid droplet ejection condition.

### [1-3. Liquid Droplet Ejection Method]

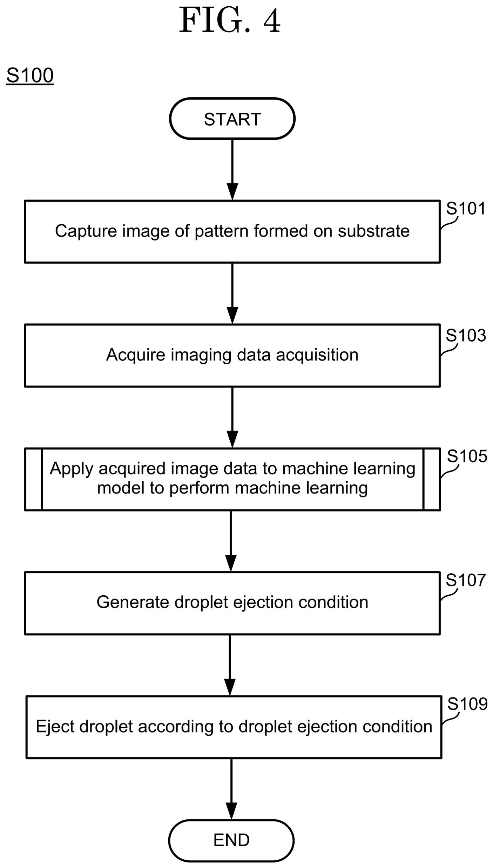

Next, a liquid droplet ejection method according to the present embodiment will be described with reference to FIG. 4 to FIG. 8C. FIG. 4 is a flowchart S100 showing the liquid droplet ejection method.

First, the imaging unit 160 captures an image of a pattern formed on the substrate 200 based on an instruction from the control unit 110 (step S101). When the pattern is imaged, the entire pattern may be imaged at a wide angle, or may be imaged by a scanning operation, or may be partially imaged. The captured image data is transmitted to the control unit 110. The acquisition unit 1101 acquires imaging data (step S103), and the imaging data is stored in the storage unit 115.

In this case, the control unit 110 may acquire information such as the minimum pattern size, the shape, the presence or absence of a step, and the like from the imaging data.

Next, the learning processing unit 1103 applies the acquired image data to the machine learning model to perform machine learning (step S105). The machine learning model is generated as follows.

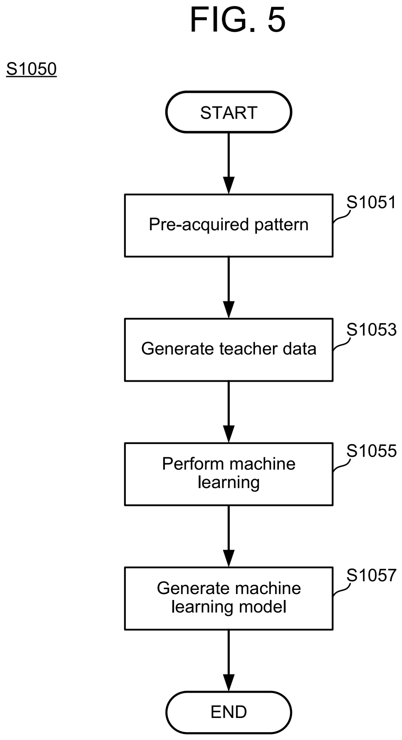

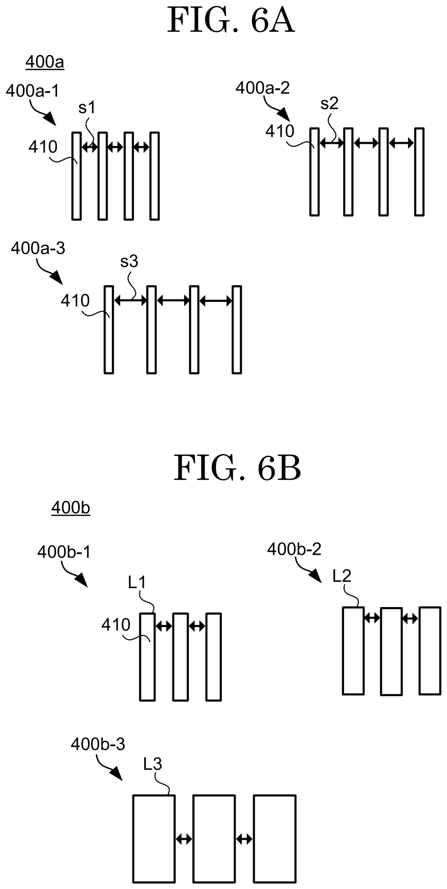

FIG. 5 is a flowchart S1050 of machine learning model generation according to the present embodiment. As shown in FIG. 5, imaging data for generating a machine learning model is acquired in advance (step S1051). FIG. 6A to FIG. 6B, FIG. 7A to FIG. 7C, and FIG. 8A to FIG. 8C are schematic views of imaging data. As shown in FIG. 6A to FIG. 6B, FIG. 7A to FIG. 7C, and FIG. 8A to FIG. 8C, the captured images acquired in advance are acquired to correspond to various patterns.

For a linear pattern, FIG. 6A shows a pattern 400a that differs in a spacing s between neighboring linear patterns 410. Specifically, in the pattern 400a, a pattern 400a-1 has a spacing s1. A pattern 400a-2 has a spacing s2. A pattern 400a-3 has a spacing s3. The spacing increases in the order of the spacing s1, the spacing s2, and the spacing s3. In this case, shapes of the patterns 400a may be the same. In FIG. 6B, a pattern 400b is shown in which linear patterns 410 having differing line widths L are formed. Specifically, in the pattern 400b, a pattern 400b-1 has a line width L1. A pattern 400b-2 has a line width L2. A pattern 400b-3 has a line width L3. The line width L increases in the order of the line width L1, the line width L2, and the line width L3. In this case, spacing between neighboring patterns 400b may be the same.

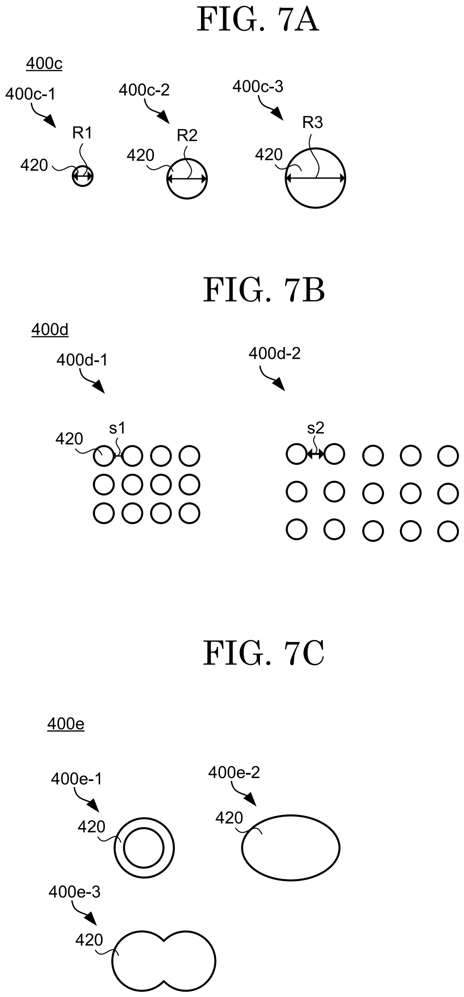

FIG. 7A shows a pattern 400c in which circular patterns 420 having differing diameters are formed. Specifically, in the pattern 400c, a pattern 400c-1 has a circular pattern 420 having a diameter R1. A pattern 400b-2 has a circular pattern 420 having a diameter R2. A pattern 400b-3 has a circular pattern 420 having a diameter R3. The diameter increases in the order of the diameter R1, the diameter R2, and the diameter R3. In FIG. 7B, pattern 400d is shown in which the spacing s between neighboring circular patterns 420 differs. Specifically, in the pattern 400d, the pattern 400d-1 has the spacing s1. A pattern 400d-2 has the spacing s2. The spacing s increases in the order of the spacing s1 and the spacing s2. Each circular pattern 420 may be the same. In FIG. 7C, a pattern 400e having a complex circular pattern is shown. Specifically, a pattern 400e-1 has an annular shape so as to have a space in a center portion. A pattern 400e-2 has an elliptical shape. A pattern 400e-3 has a configuration in which two circles are partly joined.

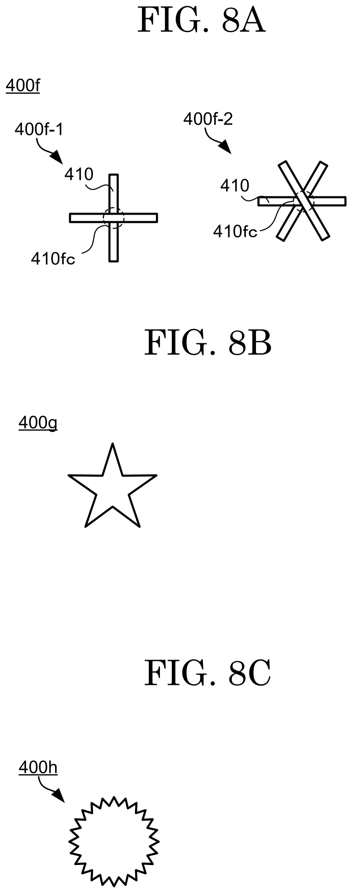

More complex patterns are shown in FIG. 8A, FIG. 8B, and FIG. 8C. In a pattern 400f, a plurality of patterns partially overlap. Specifically, in FIG. 8A, in a pattern 400f-1, two linear patterns 410 overlap each other in an overlapping portion 410fc. In a pattern 400f-2, three linear patterns 410 overlap each other in the overlapping portion 410fc. As a result, the pattern 400f-1 and the pattern 400f-2 have steps of differing heights. In FIG. 8B, a pattern 400g having a star shape as a pattern having a plurality of irregularities is shown. In FIG. 8C, a pattern 400h with more irregularities is shown.

Next, teacher data is generated based on the captured data acquired in advance (step S1053). In this case, the teacher data may be arbitrarily generated by an input from a user. Specifically, the teacher data may be generated by inputting a result of actual ejection processing. Further, the teacher data may be a single pattern and a subdivided liquid droplet ejection condition corresponding thereto, or may be a pattern group in a predetermined range and a liquid droplet ejection condition corresponding thereto. In the case of one pattern and the subdivided liquid droplet ejection condition corresponding thereto, a more accurate liquid droplet ejection condition can be generated (set). In the case of the pattern group and the corresponding liquid droplet ejection condition in a predetermined range, the liquid droplet ejection condition in a wide area can be generated (set).

Next, machine learning is performed using the teacher data and the captured data acquired in advance (step S1055). Known learning methods such as error back propagation (Backpropagation) and genetic algorithms (Genetic Algorithm: GA) may be used for machine learning. By repeatedly performing the machine learning, a machine learning model for generating a condition for ejecting liquid droplets (liquid droplet ejection condition) is generated (step S1057).

A description will be given while returning to FIG. 4. Machine learning is performed by applying the imaging data to the machine learning model, and as a result, the control unit 110 generates (outputs) liquid droplet ejection conditions (step S107). In this case, as shown in FIG. 3, a liquid droplet ejection condition data set including the pattern identifier 301 corresponding to the acquired imaging data, the distance between the substrate and the liquid droplet ejection nozzle 303, the ejection voltage 305, and the frequency 307 for applying a pulse voltage when ejecting the liquid droplet is generated as the liquid droplet ejection conditions.

The control unit 110 instructs the liquid droplet ejection unit 140 to perform liquid droplet ejection according to the generated liquid droplet ejection condition. Finally, according to the above instruction, the liquid droplet ejection unit 140 ejects liquid droplets onto the substrate 200 (step S109). The above is the liquid droplet ejection method.

In the case of the present embodiment, an optimum liquid droplet ejection condition (parameter) corresponding to the pattern is set by using the pattern on the substrate as an input parameter. As a result, liquid droplet ejection by an electrostatic method can be performed without being affected by the pattern, and uniform pattern formation can be performed. Therefore, by using the present embodiment, it is possible to stably perform liquid droplet ejection by the electrostatic method without being affected by the pattern on the substrate side.

In addition, in the case where the liquid droplet ejection condition generated in the present embodiment is a subdivided condition corresponding to one pattern, the liquid droplet can be ejected under optimum conditions for each ejection. In addition, in a case where the liquid droplet ejection condition generated in the present embodiment corresponds to the pattern group in a predetermined range, the liquid droplet can be ejected under the optimum condition for the range.

Further, in the case of the present embodiment, it is possible to generate the liquid droplet ejection condition instantaneously after the pattern on the substrate is imaged. Accordingly, it is also possible to eject liquid droplets while dynamically controlling the ejection conditions.

### [Second Embodiment]

In the present embodiment, a liquid droplet ejection method different from that of the first embodiment will be described. Specifically, an example in which conductivity of the substrate side is applied to the machine learning model to generate liquid droplet ejection conditions will be described. In addition, the same configuration as that of the first embodiment will be omitted as appropriate in the description.

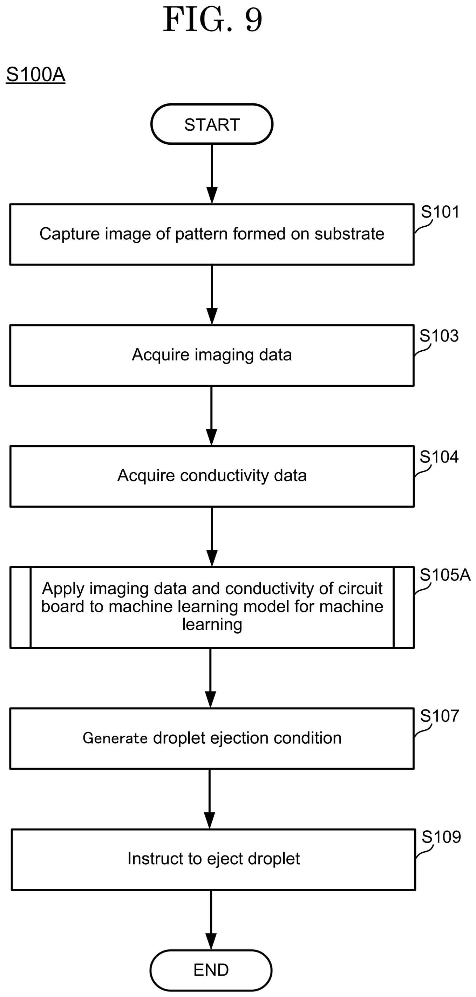

FIG. 9 is a flowchart S100A showing a liquid droplet ejection method according to the present embodiment. In the present embodiment, the acquisition unit 1101 may acquire conductivity data of the substrate (step S104) together with the imaging data (step S103). Then, the learning processing unit 1103 may apply the conductivity on the substrate side to one machine learning model together with the imaging data (step S105A). In this case, the machine learning model is a learning model in which a correspondence relationship between the pattern on the substrate and the conductivity on the substrate side is learned.

In the case of electrostatic liquid droplet ejection, if a charge is accumulated on the substrate 200 side (inside the substrate or the pattern), a voltage to be applied to the liquid droplet ejection nozzle 141 may not be appropriately applied. In this case, even if other liquid droplet ejection conditions (parameters) are appropriate, liquid droplets cannot be stably ejected. Therefore, in a case where the conductivity of the substrate 200 side is low (in the case of an insulating substrate), it is desirable to control the distance between the substrate 200 and the liquid droplet ejection nozzle 141 to be increased. The distance between the substrate 200 and the liquid droplet ejection nozzle 141 may be influenced by a size of the pattern. Therefore, by applying the conductivity (or resistivity) of the substrate 200 (or pattern) to the machine learning model, it is possible to set an optimum liquid droplet ejection condition, in particular, an optimum distance between the substrate 200 and the liquid droplet ejection nozzle 141.

Therefore, by using the present embodiment, liquid droplet ejection by the electrostatic method can be performed more stably.

In addition, in the present embodiment, although the conductivity of the substrate 200 side is applied to one machine learning model together with the imaging data, the present invention is not limited thereto. For example, conductivity on the substrate 200 side may be applied to another machine learning model to perform machine learning, and a correction factor corresponding to conductivity may be generated. In this case, a new liquid droplet ejection condition may be generated by combining the correction factor with the liquid droplet ejection condition generated by applying the pattern on the substrate to the machine learning model.

### [Third Embodiment]

In the present embodiment, a liquid droplet ejection method different from that of the first embodiment will be described. Specifically, an example will be described in which a contact angle of a liquid droplet with respect to the substrate is applied to the machine learning model to generate the liquid droplet ejection condition. In addition, the same configuration as that of the first embodiment will be omitted as appropriate in the description.

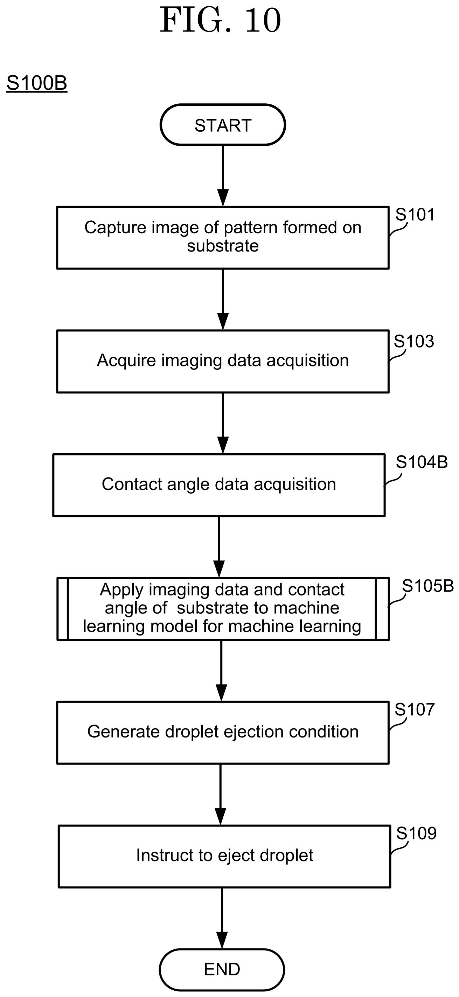

FIG. 10 is a flowchart S100B showing a liquid droplet ejection method according to the present embodiment. As shown in FIG. 10, in the present embodiment, the acquisition unit 1101 may acquire a contact angle data of the substrate (step S104B) together with the imaging data (step S103). The learning processing unit 1103 may apply the contact angle of the substrate to one machine learning model together with the imaging data (step S105B). In this case, the machine learning model is a learning model in which a correspondence relationship between the pattern on the substrate 200 and the contact angle of the substrate 200 is learned.

Depending on the contact angle of the substrate 200, a pattern having a predetermined size may not be formed on the substrate 200. Therefore, in accordance with the contact angle of the substrate 200, the generation unit 1105 may add a pretreatment (liquid repellency treatment, lyophilic treatment) before liquid droplet ejection to the liquid droplet ejection condition.

In addition, in the present embodiment, the example has been shown in which although the contact angle of the substrate 200 is applied to one machine learning model together with the imaging data, the present invention is not limited thereto. For example, the contact angle on the substrate 200 side may be applied to another machine learning model to perform machine learning, and a correction factor corresponding to the machine learning model may be generated. In this case, a new liquid droplet ejection condition may be generated by combining the correction factor with the liquid droplet ejection condition generated by applying the pattern on the substrate 200 to the machine learning model.

Therefore, by using the present embodiment, liquid droplet ejection by the electrostatic method can be performed more stably.

### [Fourth Embodiment]

In the present embodiment, a liquid droplet ejection device different from the first embodiment will be described. Specifically, the liquid droplet ejection device including a second imaging unit will be described. In addition, parts that overlap the description of the first embodiment will be omitted as appropriate.

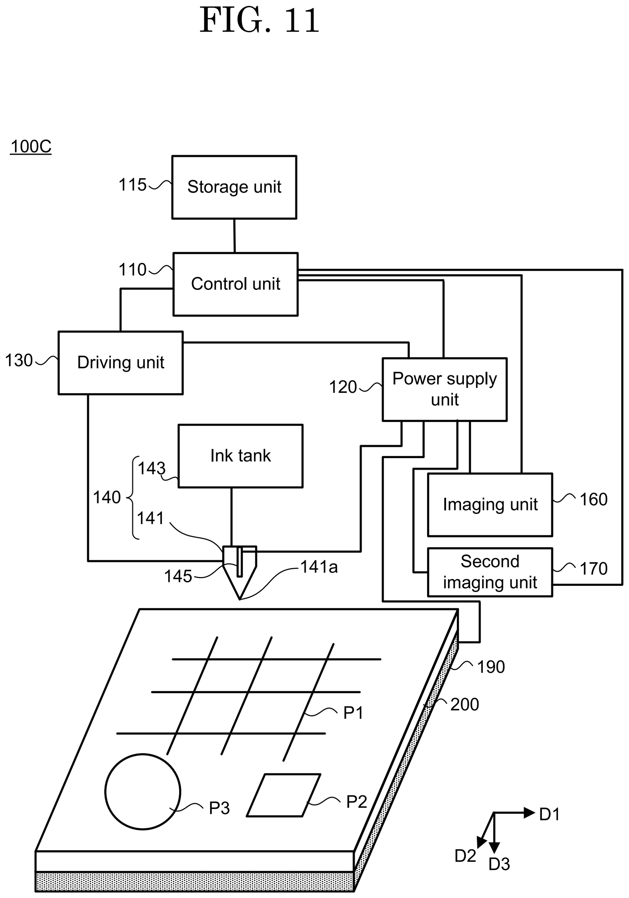

FIG. 11 is a schematic diagram of a liquid droplet ejection device 100C. As shown in FIG. 11, the liquid droplet dispensing device 100C includes a second imaging unit 170 in addition to the control unit 110, the storage unit 115, the power supply unit 120, the driving unit 130, the liquid droplet ejection unit 140, the imaging unit 160, and the substrate holding unit 190.

The second imaging unit 170 may capture an image of a liquid droplet shape ejected from the liquid droplet ejection nozzle 141. The captured imaging data (also referred to as second imaging data) is transmitted to the control unit 110. The acquisition unit 1101 may acquire the second imaging data, and the learning processing unit 1103 may perform machine learning by applying the second imaging data together with the first imaging data to one machine learning model. In this case, the machine learning model is a learning model in which the correspondence relationship between the pattern on the substrate 200 and the shape of the liquid droplet is learned.

In the case of the present embodiment, since a dynamic shape of the liquid droplet can be grasped, machine learning can be performed using information that has not been input as parameters so far. This makes it possible to generate more appropriate liquid droplet ejection conditions. Therefore, by using the present embodiment, liquid droplet ejection by the electrostatic method can be performed more stably.

In addition, in the present embodiment, although the example has been shown in which the second imaging data is applied to one machine learning model together with the first imaging data, the present invention is not limited thereto. For example, the second imaging data (the shape of the liquid droplet) may be applied to another machine learning model to perform machine learning, and a correction factor corresponding thereto may be generated. In this case, a new liquid droplet ejection condition may be generated by combining the correction factor with the liquid droplet ejection condition generated by applying the pattern on the substrate 200 to the machine learning model.

Further, in the present embodiment, although the example has been shown in which the imaging unit 160 and the second imaging unit 170 are separately provided, the present invention is not limited thereto. The imaging unit 160 and the second imaging unit 170 may be integrally provided.

### [Fifth Embodiment]

In the present embodiment, a liquid droplet ejection device different from the first embodiment will be described. Specifically, an example in which the control unit 110 includes an analysis unit as a functional unit will be described. In addition, the same configuration as that of the first embodiment will be omitted as appropriate in the description.

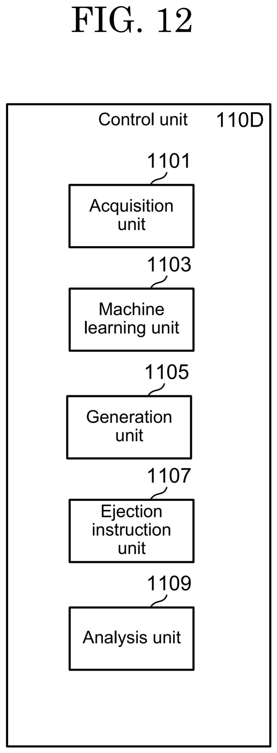

FIG. 12 is a functional block of a control unit 110D. As illustrated in FIG. 12, the control unit 110D includes an analysis unit 1109 in addition to the acquisition unit 1101, the learning processing unit 1103, the generation unit 1105, and the ejection instruction unit 1107 as functional units in a program for realizing liquid droplet ejection (liquid droplet ejection program).

The analysis unit 1109 has a function of comparing and analyzing the shape or size of the liquid droplet ejected according to the generated liquid droplet ejection condition with a predetermined shape or size of liquid droplet, and determining the liquid droplet ejection condition. The analysis result may be applied to the machine learning model. Accordingly, appropriate liquid droplet ejection conditions can be generated. Therefore, by using the present embodiment, liquid droplet ejection by the electrostatic method can be performed more stably.

### [Sixth Embodiment]

In the present embodiment, a liquid droplet ejection device different from the first embodiment will be described. Specifically, an example in which the liquid droplet ejection unit includes a multi-nozzle head will be described. Note that the same configuration as that of the first embodiment will be omitted as appropriate in the description.

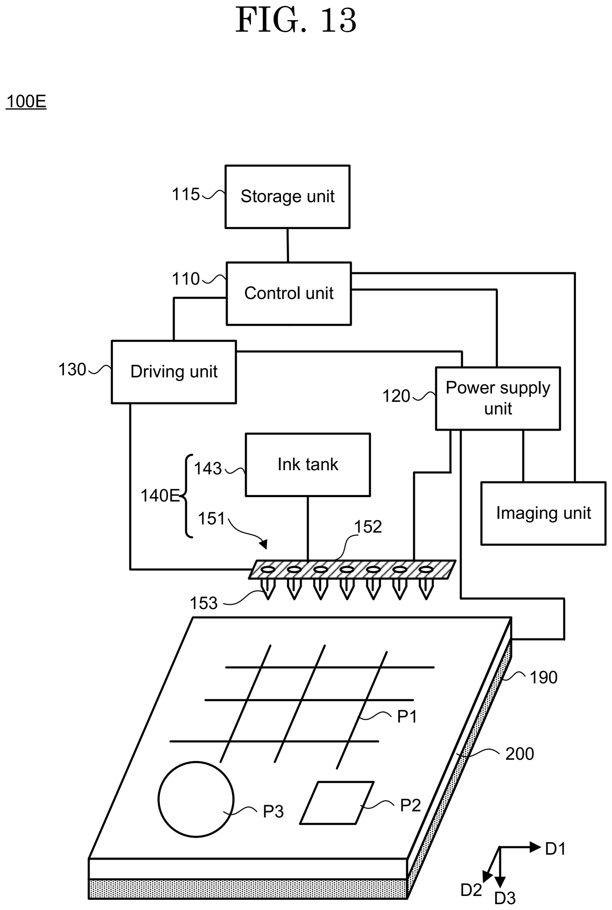

FIG. 13 is a schematic diagram of a liquid droplet ejection device 100E according to an embodiment of the present invention. As shown in FIG. 13, the liquid droplet ejection device 100E includes the control unit 110, a storage unit 115, the power supply unit 120, the driving unit 130, a liquid droplet ejection unit 140E, the imaging unit 160, and the substrate holding unit 190.

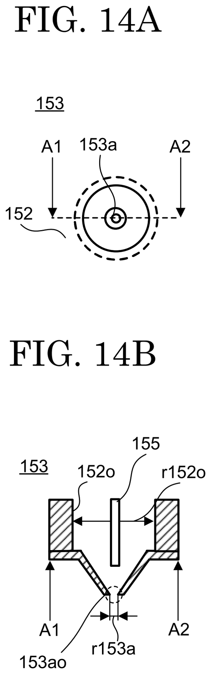

FIG. 14A is an enlarged top schematic view showing a part of a multi-nozzle head 151. FIG. 14B is an enlarged schematic cross-sectional view of a part of the multi-nozzle head 151. As shown in FIG. 13, FIG. 14A, and FIG. 14B, the liquid droplet ejection unit 140E includes the ink tank 143 and the multi-nozzle head 151.

The multi-nozzle head 151 includes a plate unit 152 and a plurality of second liquid droplet ejection nozzles 153. The multi-nozzle head 151 is used by being fixed to a mount and an attachment (not shown). The second liquid droplet ejection nozzle 153 is an electrostatic liquid droplet ejection type inkjet nozzle.

The plate unit 152 is provided in a plate shape. In this embodiment, the plate unit 152 extends in the first direction D1. A thickness of the plate unit 152 is appropriately set. In this example, the thickness of the plate unit 152 is 10 µm or more and 100 µm or less.

The second liquid droplet ejection nozzle 153 is connected to one surface (lower surface) of the plate unit 152 at an upper portion thereof. The second liquid droplet ejection nozzles 153 are arranged side by side in the first direction D1, but may also be arranged in the second direction D2 as appropriate. The second liquid droplet ejection nozzle 153 has a tapered shape.

The plate unit 152 has a through hole 152o having an inner diameter r152o larger than an inner diameter r153a of an ejection port (a tip 153a of the second liquid droplet ejection nozzle 153) of the second liquid droplet ejection nozzle 153 in a portion corresponding to (a portion overlapping) the second liquid droplet ejection nozzle 153. The inner diameter r152o of the through hole 152o of the plate unit 152 may be 1 µm or more and 100 µm or less. The inner diameter of the tip 153a of the second liquid droplet ejection nozzle 153 may be several hundred nm or more and 50 µm or less, preferably 1 µm or more and 30 µm or less, and more preferably 5 µm or more and 20 µm or less. In the present embodiment, a voltage can be applied to an electrode 155 provided in each of the second liquid droplet ejection nozzles 153. The electrode 155 may be provided with tungsten, nickel, molybdenum, titanium, gold, silver, copper, platinum, or the like.

In the present embodiment, liquid droplet ejection conditions may be generated for each nozzle in accordance with a pattern on the substrate. Accordingly, appropriate liquid droplet ejection conditions can be set according to the presence or absence of a pattern, a shape of the pattern, a size of the pattern, and the like, and pattern formation time can be shortened by ejecting the liquid droplets using a plurality of nozzles.

Further, in the present embodiment, the shape of the liquid droplet ejection nozzle may be applied to the machine learning model. Accordingly, appropriate liquid droplet ejection conditions can be generated in accordance with a difference between a single nozzle and the multi-nozzle.

In addition, in the present embodiment, although the example has been described in which the electrode 155 is provided in each of the second liquid droplet ejection nozzles 153, the present invention is not limited thereto. For example, a voltage may be directly applied to the second liquid droplet ejection nozzle 153 and the plate unit 152 without the electrode 155, or a voltage may be applied to ink stored in the second liquid droplet ejection nozzle 153. Further, although an example in which a voltage is applied to the second liquid droplet ejection nozzle 153, the plate unit 152, or the ink has been described, a voltage may be applied to a jig (for example, a mount or an attachment) holding the multi-nozzle head 151.

### [Modification]

Within the scope of the concept of the present invention, a person skilled in the art may conceive of various modifications and alterations, and it is understood that these modifications and alterations also fall within the scope of the present invention. For example, any embodiment in which a person skilled in the art has appropriately added or deleted components, combined or modified the designs of the embodiments described above, or added or omitted processing or changed conditions, is included within the scope of the present invention as long as it contains the essence of the present invention.

### [Modification 1]

In the first embodiment of the present invention, although an example has been described in which the substrate 200 is imaged to acquire imaging data, the present invention is not limited thereto. For example, shape data (design data) corresponding to a pattern formed on the substrate 200 may be acquired and applied to the machine learning model.

### [Modification 2]

In the first embodiment of the present invention, although an example has been described in which the generated liquid droplet ejection condition includes the distance between the substrate and the liquid droplet ejection nozzle 303, the ejection voltage 305, and the frequency 307 at which the pulse voltage is applied when the liquid droplet is shown, the present invention is not limited thereto. For example, the liquid droplet ejection condition may appropriately include other parameters such as a scanning speed, an ejection amount, and an ejection position (coordinates).

### [Modification 3]

In an embodiment of the present invention, the liquid droplet ejection condition may be generated by applying at least one of humidity and a diameter of the liquid droplet ejection nozzle to the machine learning model. In this case, the machine learning model may be a learning model in which a correspondence relationship between a pattern on a substrate and at least one of a shape and humidity of an electrostatic liquid droplet ejection nozzle is learned.

### REFERENCES SIGNS LIST

100: liquid droplet ejection device, 110: control unit, 115: storage unit, 120: power supply unit, 130: driving unit, 140: liquid droplet election unit, 141: liquid droplet ejection nozzle, 141a: tip, 143: ink tank, 145: electrode, 151: multi-nozzle head, 152: plate unit, 152o: through hole, 153: second liquid droplet ejection nozzle, 153a: tip, 155: electrode, 160: imaging unit, 170: second imaging unit,190: substrate holding unit, 200: substrate, 300: liquid droplet ejection condition data set, 301: pattern identifier, 303: distance, 305: ejection voltage, 400a to h: pattern, 400a-1 to 3: pattern, 400b-1 to 3: pattern, 400c-1 to 3: pattern, 400d-1 to 2: pattern, 400e-1 to 3: pattern, 400f-1 to 3: pattern, 410: linear pattern, 410fc: overlapping portion, 420: circular pattern, 1101: acquisition unit, 1103: learning processing unit, 1105: generation unit, 1107: ejection instruction unit, 1109: analysis unit.

## Claims

1. A liquid droplet ejection method comprising:
capturing an image of a pattern on a substrate;
acquiring first image data corresponding to the pattern; and
applying the first image data to a machine learning model to perform machine learning and generate liquid droplet ejection conditions based on an electrostatic method.

2. The liquid droplet ejection method according to claim 1, further comprising:
generating the machine learning model by performing machine learning on pre-acquired first image data.

3. The liquid droplet ejection method according to claim 1, further comprising:
capturing an image of a shape of a liquid droplet ejected from an electrostatic liquid droplet ejection nozzle, wherein
the machine learning model is a learning model trained on a correlation between the pattern and the shape the liquid droplet.

4. The liquid droplet ejection method according to claim 1, wherein
the machine learning model is a learning model trained on a correlation between the pattern and conductivity of the substrate.

5. The liquid droplet ejection method according to claim 1, wherein
the machine learning model is a learning model trained on a correlation between the pattern and at least one of a shape of the electrostatic liquid droplet ejection nozzle and humidity.

6. The liquid droplet ejection method according to claim 1, wherein
the machine learning model is a learning model trained on a correlation between the pattern and a contact angle of a liquid droplet with respect to the substrate.

7. The liquid droplet ejection method according to any one of claims 1 to 6, wherein
the liquid droplet ejection conditions include at least one of an ejection voltage, frequency, and a distance between the substrate and the electrostatic liquid droplet ejection nozzle.

8. A liquid droplet ejection device comprising:
an imaging unit configured to capture an image of a pattern on a substrate; and
a control unit configured to acquire first image data corresponding to the pattern, apply the first image data to a machine learning model to perform machine learning, and generate liquid droplet ejection conditions based on an electrostatic method.

9. The liquid droplet ejection device according to claim 8, wherein
the control unit generates the machine learning model by performing machine learning on pre-acquired first image data.

10. The liquid droplet ejection device according to claim 8, further comprising:
a second imaging unit configured to capture an image of a shape of a liquid droplet ejected from an electrostatic liquid droplet ejection nozzle, wherein
the machine learning model is a learning model trained on a correlation between the pattern and the shape of the liquid droplet.

11. The liquid droplet ejection device according to claim 8, wherein
the machine learning model is a learning model trained on a correlation between the pattern and conductivity of the substrate.

12. The liquid droplet ejection device according to claim 8, wherein
the machine learning model is a learning model trained on a correlation between the pattern and at least one of a shape of the electrostatic liquid droplet ejection nozzle and humidity.

13. The liquid droplet ejection device according to claim 8, wherein
the machine learning model is a learning model trained on a correlation between the pattern and a contact angle of a liquid droplet with respect to the substrate.

14. The liquid droplet ejection device according to any one of claims 8 to 13, wherein
the liquid droplet ejection conditions include at least one of an ejection voltage, frequency, and a distance between the substrate and the electrostatic liquid droplet ejection nozzle.
